Europäisches Patentamt

European Patent Office

Office européen des brevets

(19)

(11) Publication number: **0 122 786**
**A2**

# (12) EUROPEAN PATENT APPLICATION

(21) Application number: **84302522.2**

(22) Date of filing: **13.04.84**

(51) Int. Cl.³: **B 60 T 1/10**

(30) Priority: **14.04.83 ES 521475**

(43) Date of publication of application:
**24.10.84 Bulletin 84/43**

(84) Designated Contracting States:
**AT BE CH DE FR GB IT LI LU NL SE**

(71) Applicant: **Bar Boo, Jose**
**Via de la Hispanidad, 65**
**Vigo (Pontevedra)(ES)**

(72) Inventor: **Garcia Perez, Basilio**
**Urzaix, 87-50E**
**Vigo(ES)**

(74) Representative: **Prutton, Roger et al,**
**Marks & Clerk Alpha Tower Suffolk Street Queensway**
**Birmingham B1 1TT(GB)**

(54) Inertial rotoaccumulator system.

(57) An inertial rotoaccumulator system utilises a flywheel which is run up to speed during vehicle braking and allowed to contribute energy during subsequent acceleration through the intermediary of an infinite ratio continuously variable planetary drive arrangement. This drive arrangement has a main shaft (A) and a flywheel shaft (B). Another shaft ($B_2$) is rotatable on the flywheel shaft. Continuously variable ratio belt-type drives link compound planet pulleys ($C_1$, $C_2$) on the main shaft to pulleys ($B_1^1$, and $B_2^1$) on the flywheel shaft and the other shaft and a further continuously variable ratio belt type drive means ($B_2^2$, $B_1^2$, $D_1$, $D_2$) links together the flywheel shaft and the other shaft, to enable the ratio to be set so that the flywheel shaft can rotate freely without any motion being transmitted back to the main shaft during intervals when it is required to store energy in the flywheel.

FIG-1

## INERTIAL ROTOACCUMULATOR SYSTEM

In land vehicles (automobiles, railways), the fraction of the energy consumed corresponding to the loss due to braking (during which the kinetic energy of the vehicle is converted to heat) is very variable, moreso when the stoppages are frequent, such as during congested traffic, but hardly ever negligible. However, the most important effect of the series of brakings and new accelerations on the energetic consumption is not due to the direct dissipation of heat, but due to the conditions imposed by this system on the engine power.

Especially in motor cars, the maximum engine power is, moreso, associated with the acceleration ("pick up") which it can proportion, than with the road speed. Although this maximum power only intervenes when starting and going up steep hills, the consumption has a low limit which cannot be lowered even in uniform and horizontal motion, in spite of the fact an an engine having a low power and consumption would be sufficient in this case to maintain the speed.

One way of restoring a portion of the kinetic energy of the vehicle is to use electric driving. The engines are converted to generators during braking, returning energy to the power station (in case of a trolley, electric train), or to batteries in the vehicle itself if it functions by means thereof or if it has an electrogenous group. This sytem presents the disadvantage that it does not permit high accelerations (as normally required by automobiles), since the electric motors are hardly "temperamental", that is, they are not suitable for significant and sudden changes of energy.

The main idea inspired by the inertial rotoaccumulator is that of freeing the motor from the responsibility of the sudden and short changes of energy, required by the system to which the vehicle should be subjected.

The engine should only supply the average power for sufficiently long periods of time (for example of one minute), so that any system is capable of adapting its power with optimum performance (possibility of using for example external combustion engines, the Stirling engine, etc.).

Naturally, energy should be stored during braking which is returned to the following acceleration, without using a dual drive system and without the intervention of a generator (or accumulator)-electric motor system, since it is unfit for sudden acceleration and braking.

The simplest course of action is to convert the motion kinetic energy of the vehicle to rotational kinetic energy of an accumulator flywheel, utilizing therefor purely mechanical means. Therefore, the wheels should be connected to said flywheel through a continuous speed ratio changing system: braking will consist in displacing said ratio towards the wheel (which should be able to rotate "idly" with a minimum friction) while acceleration will be produced by the inverse displacement.

This system of the invention, of special interest due to the energetic and ecological crisis, is more advantageous than the saving in energy due to the recovery of braking, viz:

a) Energetic saving

$a_1$. Restoring when braking

$a_2$. Designing with low powered engines

$a_3$. Perfection of the fuel due to the equilibrium of the engine

b) Possibility of using low quality fuels, easier to burn in external combustion engines;

c) Possibility of consuming electric energy using accumulators.

This type of driving is facilitated both by the energetic saving and by the liberation of the engine of sudden changes of energy. The kinetic energy accumulator flywheel can be made to coincide with the armature of the motor, with the consequent reduction in weight and costs.

Referring to the energetic saving due to restoring when braking, this would be of special importance in the case of high speed passenger trains which make frequent stops, since it is possible to reduce the frictions and, therefore, the average power, but an elevated power is required when starting and braking.

With the present distribution between the forms of primary energy (overwhelming predominance of fossil fuels), the electric drive of vehicles is an energetic absurdity, since the fuels are burnt to produce energy, which moves generators, to transmit the energy at a distance, store it (with high losses), and convert it again to mechanical energy. The situation will differ when in the future, due to present-day technology, an increasing portion of the primary energy should be converted mainly to electrical energy. This occurs with nuclear, whether fission or fusion, hydraulic, eolic, tidal and solar (photovoltaic or thermic at high temperature) energy. In any case, the electric vehicle is justified for non-contaminating reasons and in reserved areas.

d) Contamination reduction, due to the balanced system of combustion engines, or to the electric drive.

The idea of a continuous purely mechanical change of speeds, presents various difficulties:

a) the simplest and known way of making a continuous change, that is, by pulleys formed of two conical pieces having a variable separation, is in principle hardly suitable to transmit elevated energies.

This process is used in the "Variomatik change" of the Dutch patent.

b) The interval (multiplicative) between the maximum and the minimum speed ratios is not sufficiently long.

c) In any case, the lowest point of this interval cannot be zero (or infinite, depending on the proportion). That is to say, it is not possible with cone pulleys, to continuously reach a position at which one of them is at rest while the other is still rotating.

This latter difficulty merits special comments.

From an energetic point of view, the fact that the kinetic energy corresponding to a residual speed of,for example,the fifth part of the initial speed is lost, is not too important, since this means that 24/25 of the kinetic energy existing before applying the brakes has been restored. In theory, it would be possible to connect the flywheel to the wheels or the transmission shaft through pulleys, and to reduce the speed of the vehicle by storing energy in the flywheel until a minimum from which the flywheel should be "disengaged" and a conventional braking system should act. Although this is energetically feasible, it is bulky and, therefore, hardly safe. Therefore, one of the features characterising the inertial rotoaccumulator resides in that with a single mechanism the complete range of speeds until the vehicle is stopped, is covered.

To achieve this, a continuous change speed ratio planetary having an infinite range, known as infinite range planetary, is used, which constitutes the main novel feature of the inertial rotoaccumulator, capable of converting continuous change speed ratio range, achieved by any system (for example by cone pulleys having a variable separation) to another, one of whose extremes is the zero ratio (if the maximum ratio is divided by the minimum, it is infinite, and hence the denomination). Difficulties b) and c) are overcome in this way.

Referring to difficulty a), which can be overcome since it is a question of dimensioning, it is possible to join the pulleys by chains instead of belts, designed to resist high stresses with low friction.

The planetary has a characteristic which should be pointed out before describing the features of the invention. The possibility of reducing one of the two speeds to zero is associated with the fact that the energy moving between its part is greater than that entering and leaving the assembly, the proportion thereof being higher the more the low speed approaches zero.

Since the frictional power will be an approximately constant fraction of the sums of the powers of its various parts, when the speed tends to zero the performance of the planetary will also tend to zero, that is, the fraction of energy given off by the vehicle which does not reach the flywheel will tend to 100%. According to this, the planetary does not excel, from an energetic point of view, the mixed system mentioned above (continuous change to a minimum speed, after braking with dissipation of heat), but its main advantage is its uniqueness and simplicity and, therefore, its safety.

In any case, it is convenient to reduce to a maximum the frictions. The planetary is, therefore, completed with power transmission forms specially designed therefor: rhombic-linked chain for the cone pulleys and roller meshing for the gears.

The elements comprising the inertial rotoaccumulator are:

1) Rotational kinetic energy accumulator flywheel;

    2)  Infinite ratio planetary

    3)  Speed ratio control system

    4)  Transmission

1)  Rotational kinetic energy accumulator flywheel.

The accumulator flywheel can be of two basic types: with constant moment of inertia (rigid flywheel) or with adjustable moment of inertia. The second possibility involves a reinforcement of the function of the infinite ratio planetary since the increase in the moment of inertia is equivalent to the increase in the kinetic energy for a given speed, so that if the speed ratio remains constant the effect is a braking, to withdraw the necessary energy. Adjustment of the moment of inertia can be achieved in two ways:

a)  the flywheel is formed of a shaft from which articulated arms supporting counterweights protrude. A group of arms is coupled to the shaft by means of a clamp displaceable therealong, so that the radius of turn of the counterweights depends on the position of the clamp.

b)  the flywheel is rigid and hollow. The interior thereof can be filled with mercury which can be pumped towards the axis of rotation or it can be displaced by the centrifugal force to the peripheral area (of maximum speed of rotation)

Any one of these two systems permits sudden changes of speed, but of a minor amplitude. They can be combined with the planetary, acting as a complement thereof. The main defect thereof, is that they cannot reach such high speeds of rotation as the rigid flywheel, in case a) because the centrifugal force on the counterweights is borne  by the arms and not by the material of
the counterweights themselves (since a continuous circle
is not formed).

In case b), because the material should bear
its apparent "weight" in the gravitational centrifugal
field , plus that of the mercury.

In the case of the  rigid ring-shaped flywheel
whose weight is concentrated in the periphery, the maximum linear speed at which it can move is given by:

$$4 = \sqrt{\frac{k}{}}$$

wherein k is the  tensional stress (tension/section) to
which the material can be subjected and $\rho$ its density.
If the flywheel should store a kinetic energy equal to
the maximum of the vehicle (so that its kinetic moment
is at a maximum when the vehicle is at rest, and zero
when it reaches its maximum speed, it can easily be deduced that the ratio of the flywheel weight to the total
of the vehicle is:

$$\frac{m}{M} = \frac{\rho}{k} \, V_m^2$$

m being the weight of the flywheel, M that of the vehicle,
and $V_m$ the maximum speed of the vehicle.

Thus, for example, if the material is ordinary
steel  and assuming that the maximum tension is of 1,500
$Kp/cm^2$ (sufficiently conservative) and the maximum vehicle speed is of  130 Km/h, the weight of the flywheel will be in the range  of 6% of the total.  Using synthetic fibers, such  as nylon or kevla, this percentage can
be highly reduced.

For a better understanding of this invention,
a set of drawings  is accompanied, forming an integral
part of this specification, wherein illustratively and
not limiting, the following  is represented:

Figure 1 is a sectional schematic view of the
infinite ratio planetary incorporated to the inertial
rotoaccumulator of the invention.

Figure 2 is a plan view of the transmission
chain connecting the pulleys of the infinite ratio planetary.

Figure 3 is  a sectional view taken on line
A-B of figure 2.

Figure 4 is a  perspective view of the link of
the chain of figure 2.

Figure 5 is a section taken on line C-D of
figure 4.

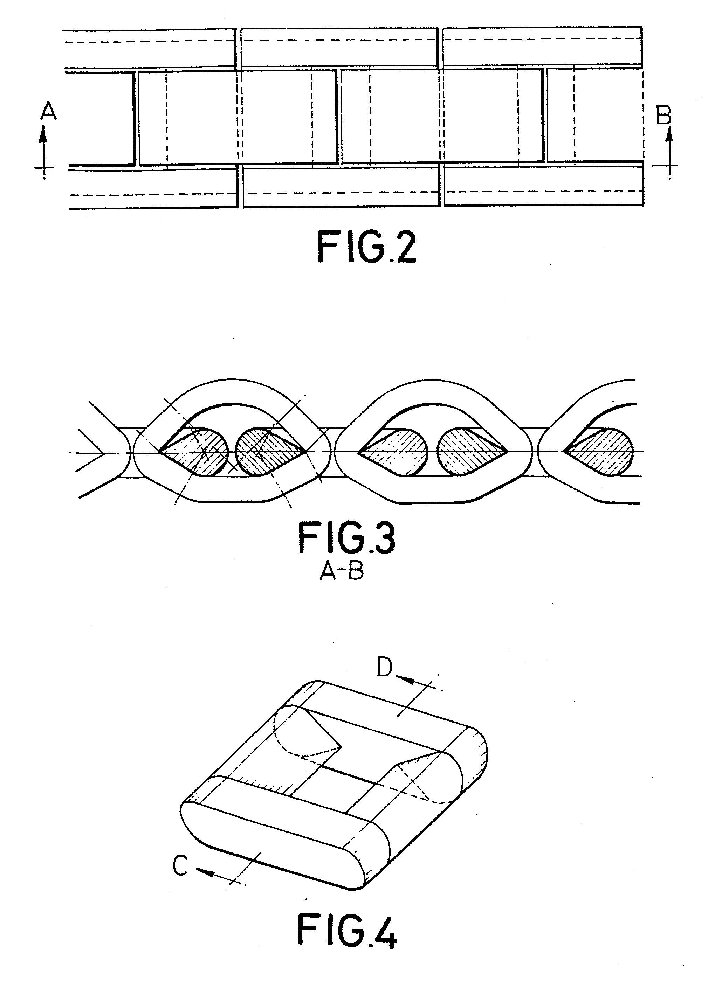

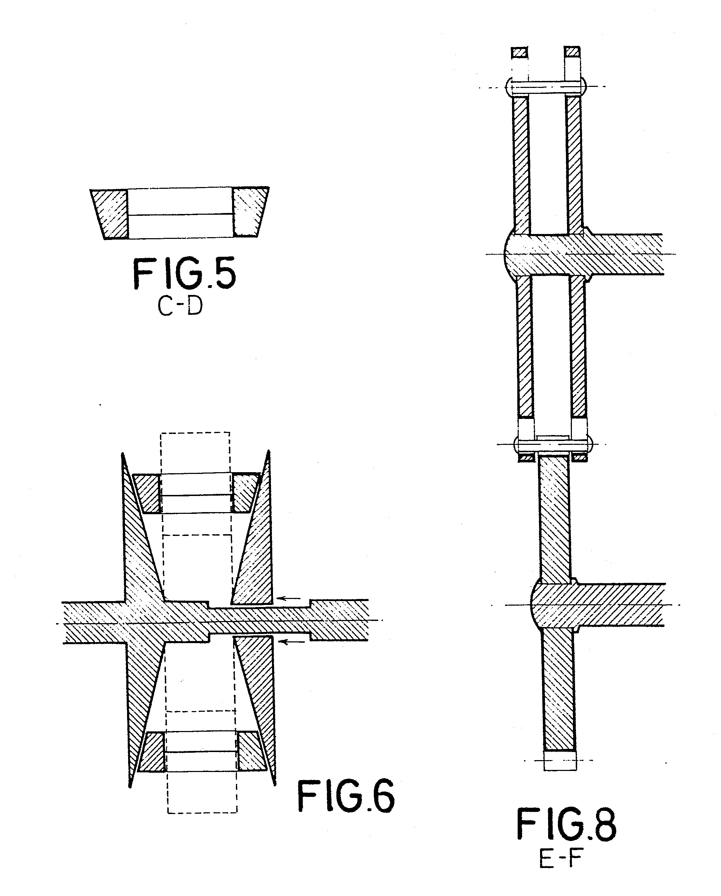

Figure 6 is a sectional view of a pulley to
which the chained transmission system of figure 2 is
coupled.

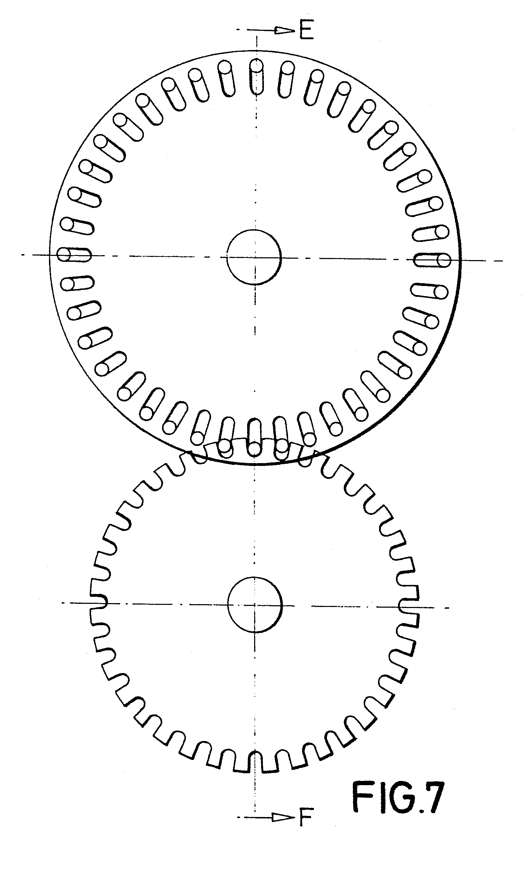

Figure 7 is a plan view of the roller mesh
transmission, for the mechanical connection of the infinite ratio planetary.

Figure 8 is a section taken on line E-F of
figure 7.

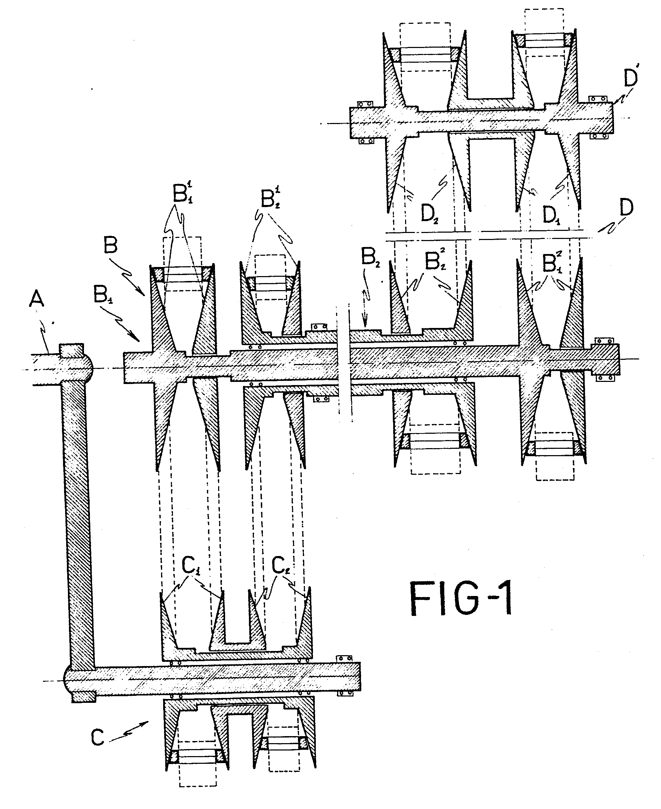

Referring to the mentioned figures, it can be
seen that the inertial rotoaccumulator system of the invention has an infinite  ratio planetary illustrated in figure 1, comprised of the following parts:

A:  Crankshaft-Main shaft

$B_1$ and $B_2$: Pulleys (or gears) coaxial with secondary shafts

C:  Dual satellite pulley (or dual gear) comprised of two integral  pulleys $C_1$ and $C_2$

D:  Inner power transmission, between $B_1$ and $B_2$

The material shaft of $B_2$ surrounds that of $B_1$, the axis (geometric) of both prolongation of that of A. $B_2$ rests on $B_1$ by bearings.

The satellite C con rotate idly about the end of the crankshaft A, its axis being parallel and eccentric to the main shaft.  The pulley (or gear) $C_1$ is connected to $B_1$, and  $C_2$ to $B_2$, by means of the respective pulleys $(B_1^1)$ and $(B_2^1)$.

If C and B are formed of gears instead of pulleys, it  is possible and convenient to construct A with various arms, so that there are two, three or more satellites in symmetrical arrangement, preventing vibrations of A due  to eccentricity.

D is any system which connects $B_1$ to $B_2$ so that between their speeds there is a controlled ratio, either fixed (when the radii of at least one of the pairs of pulleys  of the transmission $B_1-C_1$ and/or $B_2-C_2$), or variable (when the former are fixed and if the pulleys of B and C are replaced by gears).  It is formed of parts: $D_1$, pulley (or  gear) acting on $B_1$, by means of the pulley (or gear) $(B_1^2)$; $D_2$, ditto on $B_2$,

D´ is capable of being a shaft parallel to the main shaft A with two integral pulleys; a shaft parallel to the main shaft with two gears or with a single gear having a normal axis to the main shaft, connecting in any case $B_1$ to $B_2$, these latter alternatives not being illustrated in the figures.

In a simplified planetary, the inner power transmission D disappears, since the secondary shaft $B_2$ is stationary.

The theoretic basis of the capacity of this system to convert a finite interval (quotient of maximum and minimum speed ratio) by means of adjustable opening cone pulleys (at the connection B-C or at D) to another infinite, capable furthermore of changing sign, is as follows:

$\Omega$ refers to the angular speed of crankshaft A

$\omega$ refers to the satellite C

$\omega_1$ and $\omega_2$ refer to the secondary shaft $B_1$ and $B_2$

$R_1$ and $R_2$ refer to the radii of the pulleys or gears of $B_1$ and $B_2$

$r_1$ and $r_2$ refer to the radii of the pulleys or gears of $C_1$ and $C_2$

To simplify the calculation, a system of coordinates rotating together with the crankshaft shall be taken as a reference. In said system the crankshaft is stationary and the speeds of the secondary shafts $B_1$ and $B_2$ and of the satellite C are respectively:

$$\omega_1 - \Omega \, , \quad \omega_2 - \Omega \, , \quad \omega - \Omega$$

Due to the connection $B_1^1$-$C_1$, the equation in absolute values (change the sign if, instead of pulleys, they are gears) of the linear speed of both are complied with:

$$R_1 \cdot (\omega_1 - \Omega) = r_1 \cdot (\omega - \Omega)$$

Then the angular speed of $C_1$ is:

$$\omega - \Omega = \frac{R_1}{r_1} \, (\omega_1 - \Omega)$$

The same ratio is complied with for $B_2^1$-$C_2$ and as $C_1$ and $C_2$ are integral pulleys:

$$\omega - \Omega = \frac{R_1}{r_1} \, (\omega_1 - \Omega) = \frac{R_2}{r_2} \, (\omega_2 - \Omega)$$

The inner transmission D, establishes a ratio between the speeds $\omega_1$ and $\omega_2$, denominated as $\alpha$:

$$\omega_2 = \alpha \cdot \omega_1$$

Then substituting:

$$\omega_1 - \Omega = \frac{R_2 \cdot r_1}{r_2 \cdot R_1} \, (\alpha \cdot \omega_1 - \Omega)$$

$\beta_a$ refers to the expression:

$$\frac{R_2 \cdot r_1}{r_2 \cdot R_1}$$

$$\omega_1 - \Omega = \beta(\alpha \omega_1 - \Omega)$$

$$\omega_1 (1 - \beta\alpha) = \Omega(1 - \beta)$$

Then

$$(1) \quad W_1 = \Omega \frac{1-\beta}{1-\beta\alpha} \qquad (2) \quad \Omega = W_1 \frac{1-\beta\alpha}{1-\beta}$$

The forms of control are the following:

a) If we now assume that $\beta$ is constant (the connection B-C can then be either by pulleys or by gears) and $\alpha$ is variable (D is formed of controlled opening cone pulleys), we have:

for $\alpha = \dfrac{1}{\beta}$ . $\Omega = 0$  for any value of $W_1$

for $\alpha > \dfrac{1}{\beta}$  $\Omega$  is a sign opposite to $W_1$

for $\alpha < \dfrac{1}{\beta}$  $\Omega$  is the same sign as $W_1$

Therefore, we should connect A to the transmission of the vehicle and $W_1$ to the accumulator flywheel. Acceleration or braking is produced, respectively, by reducing or increasing the $\alpha$ ratio. Braking is continued in reverse gear, without having to release the clutch, since $\alpha$ increases. In this sytem it is not possible for $W_1$ to be zero when $\Omega$ is finite.

b) Let us now assume that $\alpha = 1$ and $\beta$ is variable:

for $\beta = \dfrac{1}{\alpha}$  $\Omega = 0$　　　for any $W_1$

for $\beta = 1$  $W_1 = 0$　　　for any $\Omega$

Since $\alpha$ can be greater or lesser than 1, to study the entire range of speeds, let us adopt one of the hypothesis:

$0 < \alpha < 1$. The ranges in which $\beta$ should be studied are 0-1, 1-1/$\alpha$ , 1/$\alpha \longrightarrow$ . There will be a $\beta_{min.}$ pertaining to the irst and a $\beta_{max.}$ pertaining to the third.

More exactly: $\beta_{min.} - 1$, $1 - 1/\alpha$, $1/\alpha - \beta_{max.}$ are the ranges to be considered.

for $\beta_{min.} < \beta < 1$, the numerator and denominator of formula (2) are positive. $\Omega$ is positive (if we assume this to be the sign of $\omega_1$) and it increases with $\beta$.

Since $\beta$ tends to 1, $\Omega/\omega_1$ tends to $\infty$, which means that $\omega_1$ should tend to zero.

If $\beta_{min.} < \beta < 1$, the denomination of (2) is negative, the numerator is positive, then $\Omega$ is negative and decreasing in absolute value. For mechanical reasons, it will be preferable to state that for a given $\Omega$, $\omega_1$ is negative and increasing (from zero).

For $\beta = 1/\alpha$, the numeration of (2) is cancelled and therefore $\Omega$ is zero.

For $1/\alpha < \beta < \beta_{max.}$, both the numerator and the denominator are negative, $\Omega$ is positive and increases with $\beta$ (for $\omega_1$ = constant).

We note that the change of $\beta$ offers a wider range of movement and naturally the separation of the cone pulleys whose axis rotates (C) should be controlled. This system, with the adjustment of the moment of inertia of the flywheel, will only be of interest in special cases and requires the complement of suitable servomechanisms not described here since we are dealing with particulars of the embodiment of the inertial rotoaccumulator.

c) Let us assume, finally, that $\alpha = 0$ and $\beta$ is variable. Formula (1) is simplified as follows:

$$\omega_1 = \Omega(1 - \beta)$$

If the extremes of $\beta$ are such that $\beta_{min.} < 1 < \beta_{max.}$, we have

$\beta_{min.} < \beta < 1$, $\omega_1$ positive, decreasing upon increasing of $\beta$

$\beta = 1, \omega_1 = 0$

$1 < \beta < \beta_{max.}$, $\omega_1$ negative, increasing in absolute

value when $\beta$ increases (reverse).

In this system D disappears. Referring to the adjustment of $\beta$, that is the ratio

$$\frac{R_2 \cdot r_1}{r_2 \cdot R_1}$$

of the radii of the pulleys $B_1$ and $B_2$, $C_1$ and $C_2$, it is necessary to point out that if the separation of the cones of $B_2$, whose axis is stationary, is adjusted, it is activated (by the tension of the belt or chain) on those of $C_2$, and these on $C_1$ (the adjacent cones of both can be integral in the linear displacement along the axis of C: the separation at C implies approximation at $C_1$), and these on $B_1$. The mechanical control is even simpler than in case a). We shall immediately see that from the point of view of losses of energy due to friction, this system is less favourable than the other two.

Dissipated power

For a better idea, let us assume the control system a), in which $\Omega$ is the speed which should be able to be reduced to zero or become negative and $\omega_1$ ($B_1$ is the shaft connected to the flywheel) is that which should normally be increased upon braking. In general, except when the vehicle moves at high speeds, $\omega_1$ and $\omega_2'$ will be sufficiently greater than $\Omega$

Discarding for the moment frictions, P shall refer to the torque acting on A.

$P_1$ the torque acting on $B_1$ and $C_1$.

$P_2$ the torque acting on $B_2$ from $C_2$. It has to be equal and contrary to the torque acting on $B_2$ from $B_1$ through D, due to the equilibrium of $B_2$-

It will be complied with for powers:

$$P.\Omega = P_1\omega_1 - P_2\omega_2 = P_1'\omega_1$$

that is, the power transmitted by B to A is equal to that which it receives from the flywheel. On the other hand,

$$P = P_1 - P_2$$

$P_1 > P$ necessarily, $P_2$ could also be so, likewise.

However, if we now consider the inner frictions and to simplify matters, let us assume that the dissipated power is a constant fraction (and naturally reduced) $\mu$ of the power being transmitted at the contact zone in which said dissipation takes place, the total dissipated power will be:

$$\mu(P_1(\omega_1 - \Omega) + P_2(\omega_1 - \Omega) + P_2\omega_2 + P_2\omega_1)$$

The expression in parenthesis refers to a circulating power within the planetary. This power is, in general, greater than $P.\Omega$ which is that entering and leaving the apparatus. The ratio between both depends on the value of the quotient $\Omega/\omega_1$. When this quotient is equal to 1 and $\alpha = 1$ (which can occur in the form of speed ratio control a) and b), but not in c)), there are no slidings between B and C, the shafts $B_1$ and $B_2$ turn at the same speed and they could be engaged, short-circuiting the transmission D. In this case, the circulating power is zero.

On the other hand, when $\Omega$ tends to zero (when the vehicle is braked) and $\omega_1$ to its maximum, the ratio of the circulating power to the true power tends to infinity. This does not mean that the dissipated power tends to infinity, but it is dissipated, the majority of which is being withdrawn from the vehicle. From this consideration various practical conclusions are reached:

1. The energetic behaviour in control systems a) and b) is optimum in the proximity of $\alpha = 1$. The inertial rotoaccumulator should be designed so that this value corresponds to the most usual speed of the vehicle.

We do not consider, in the dissipated powers, frictions at shaft A, at the idler shaft of C, nor at the connection $B_1$-flywheel, which can be direct.

2. It is convenient to lessen the difference between $\omega_1$ and $\Omega$ to connect the flywheel to $B_1$, or A to the transmission of the vehicle, through a ratio which can be constant or variable. This case involves the complication (not described here) of servomechanisms which automatically distribute the speed ratios of flywheel to vehicle between the planetary and this second variable transmission.

3. As stated at the beginning, in the final step of complete braking of the vehicle, the inertial rotoaccumulator is not energetically superior to the
mentioned mixed system.

          4.  The simplest type of planetary (form of
control c)) is  not energetically the most favourable,
although a second ratio (which can be constant, to conserve the simplicity) can compensate for this, to a
large extent.

          5.  In any case, to reduce the dissipated power
within the  planetary, it is convenient to modify the
main dissipating elements thereof which are the following:
Friction Reduction:

1.  Rhombic-linked chain

          The functioning of this modification of the
normal chain  is sufficiently explained in figures 2 to
5 of the drawings.  Friction diminishes with respect to
the normal chain according to the ratio r/R, where R is
the radius  of the axis to which two successive links of
the latter are attached, while r is the radius of curvature of the contact zone between the two rhomic links,
so that if $\alpha$ is the angular opening of said zone and $\ell$
its width, $\alpha.r.\ell$ is the surface capable of transmitting
the tension to which the chain is subjected, depending
on the flexible characteristics of the material.

2.  Roller meshing

          The purpose of the roller meshing is to eliminate the sliding on the contact surface of the teeth of
the gears.  Functioning is explained in figures 7 and 8.
It comprises two wheels, one toothed and the other having
bearings, small cylinders resting on two channels (the diameter of the cylinder on which the tooth acts and its lateral projections placed in the channels not need be equal). When in contact, the tooth is displaced inwards in the channel, so that the bearing runs following half of the path of the tooth (in the event the radius of the bearing is constant). When the tooth is situated on the line which joins the axles of the wheels, that is at half of the contact gap between both, the bearing reaches its inner end position. From this position, it turns again in a contrary direction, so that when it looses contact with the tooth, it is again located at the outer end of the channels.

The bearings should be disposed at said outer end when contacting the teeth. This can be achieved in various ways: with a poorly constant spring (it can merely be a thin steel ring which compresses the bearings simultaneously), with permanent magnets (since the tooth leaves the bearing in the same position in which it finds it), when the constant position of the shafts permits same, by mere gravity (the toothed wheel below that of the bearings) ....

In the majority of the cases, the centrifugal force will be sufficient to maintain the bearings in their distal position when they are not subject to the action of the teeth. The ideal solution would be for the profile of the tooth and that of the channel to be such that the movement, without sliding of the bearings, were to imply that these were subject to two opposed forces according to a diameter. Geometrically, this is not possible. The deviation of the linear opposition can be
sufficiently small so  that the tangential resultant on
the bearing can be balanced by the static friction thereof with the tooth and the channels (therefore without
carrying out frictional work).

Speed Ratio Control System

The control system of the speed ratio can be
voluntary or automatic.

The automatic control would be necessary in
those modifications of  the inertial rotoaccumulator in
which the speed ratio change is not a direct and unique
manner of controlling the vehicle speed, when it is combined with the change of the moment of inertia of the
flywheel, or because the  storage of rotational energy
is combined with another (electric accumulators, for
example).  Basically, the control of the speed ratio will
be voluntary.

When describing the infinite ratio planetary,
we observed that the speed ratio will consist, in general,
in displacing one  of the cone pulleys, which can form
part of the inner power transmission D, or in connecting
the satellite to a secondary shaft.

The control system of the speed ratio should
exert on said cone a force which will be balanced with
the actions of the chains on the pulleys and with springs
acting on another displaceable cone.  Said  force should
make the cone stationary, or displace it in one direction or the other at a speed which will depend on the
position of the "control" (lever, pedal) or controls (of acceleration or braking).

Therefore, the speed ratio control system requires a mechanism which converts a variable (the position of the controls) to the time derivative of another variable (the position of the adjusting cone). This can be carried out in various ways known at present, wherefore no particular description thereof will be made.

The transmission used in the inertial rotoaccumulator involves the existence of three power sources which should be connected together so that it is possible to transmit it in all directions: the vehicle (wheels), the flywheel, and the engine.

The wheels-flywheel connection is the basis of the system and should be through an infinite ratio planetary, so that it is possible to reach the complete stoppage of the vehicle.

The flywheel-motor connection is necessary to initially charge the flywheel. Therewith the accumulator wheel can act as the engine flywheel, if it is an explosion engine, being partially compensated with its weight. It can be used to accelerate the engine, increasing its power without increasing the motor torque. If the engine is electric, it can serve to use a second storage system (with batteries) applied at longer time intervals than those which can be covered by the inertial rotoaccumulator (for example, restoring power when running down steep hills).

In general, this connection should take place by a continuous speed ratio changing system, but not necessarily with an infinte ratio planetary, since it is not necessary for the flywheel or the motor to be stopped when the other is turning. In the case of the electric engine, it is possible for this to be connected directly to the flywheel or even for its rotor to coincide therewith, moreso if use is made of the permanent magnet.

The direct connection of the motor-wheels, without passing the flywheel, is not necessary but recommendable for energetic reasons, since in constant, horizontal movement, the flywheel neither gives off nor absorbs energy and this passes from the motor to the wheels; the more direct the transmission, the minor the losses.

This connection should also be made with a continuous speed ratio changing system with an infinite ratio planetary or without it, but with an automatic clutch.

C L A I M S

1. Inertial rotoaccumulator system especially for use in self-moving vehicles, the main purpose of which is to convert a portion of the motion kinetic energy of the vehicle or its braking energy to rotational kinetic energy storable in purely mechanical means, coupled in "parallel" between the transmission, joining the roller elements of the vehicle and its drive engine, characterised in that it comprises the functional association of five main elements, mechanically coupled between the drive elements of the vehicle, which elements are defined by: a) a rotational kinetic energy accumulator flywheel b) an infinite ratio planetary; c) a speed ratio control system; d) a main transmission group and e) an auxiliary transmission group, the transmission group d) connects the turn of the wheels of the vehicle to the accumulator flywheel a) through the infinite ratio planetary b), while the auxiliary transmission group e) connects, for an initial period, the engine of the vehicle to the accumulator flywheel itself, this connection takes place through a continuous speed ratio changing system, the system c) acting on the elements of the infinite ratio planetary b) through means capable of converting a variable relative to the control elements of the vehicle to the time derivative of another variable relative to the elements of the infinite ratio planetary b), which planetary b) is formed of a main shaft or crankshaft A, two groups of pulleys or gears ($B_{1,2}^1$ and $B_{1,2}^2$) coaxial with a secondary shaft ($B_1, B_2$) , a dual pulley

or dual satellite gear (C) mounted on an arm of the crankshaft A and an inner power transmission group.D connected between the groups of pulleys or gears ($B^1$ and $B^2$), the infinite ratio planetary assembly being provided with means for minimising losses due to friction.

2. Inertial rotoaccumulator system according to claim 1, characterised in that the means capable of converting a variable relative to the control elements of the vehicle to the time derivative of another variable relative to the elements of the infinite ratio planetary is determined by controls and servomechanisms controlling the separation between the cones of a pulley forming part of a continuous speed ratio changing system located either in a finite ratio group of speed ranges or in an infinite ratio group.

3. Inertial rotoaccumulator system according to the preceding claims, characterised in that the supporting shaft ($B_2$) of the pulleys or gears ($B_1^1$ and $B_2^2$) surround the shaft ($B_1$) of the pulleys or gears $B_1^1$ and $B_1^2$, the secondary shaft of the assembly being coaxial with the shaft of the crankshaft A, the shaft ($B_2$) being mounted on bearings, while the satellite assembly (C) is capable of turning idly about the arm of the crankshaft connecting one of its two pulleys or gears to the pulley or gear ($B_1^1$), while the other pulley of the satellite (C) is connected to the pulley or gear ($B_2^1$).

4. Inertial rotoaccumulator system according to the preceding claims, characterised in that the
means for minimising losses due to friction consists
in transmission chains which join the various pulleys
of the infinite ratio planetary, said transmission
chains being formed of rhombic links and trapezoidal
links which are joined together, the rhombic links interconnecting with the trapezoidal links through a
transversal line constituting the axis of rotation between links.

5.  Inertial rotoaccumulator system, according to claims 1 and 3, characterised in that the means
for minimising losses due to friction consists in pairs
of roller gears disposed at different parts of the mechanical connection of the infinite ratio planetary,
one of the gears  of each pair being formed of a toothed wheel with peripheral channels having a semi-circular
bottom, while its respective gear is formed of a wheel,
the peripheral zone of which has a distribution of radial grooves in which rollers dimensioned in accordance
with the peripheral grooves  of its corresponding gear,
are capable of moving.

6.  Inertial rotoaccumulator system, according to the preceding claims, characterised in that the
means for minimising losses  due to friction consists
in rhombic or trapezoidal linked chains and pairs of
roller gears which join the pulleys and gears of the
infinite ratio planetary.

7.  Inertial rotoaccumulator system, according to claim 1, characterised in that the rotational kinetic energy accumulator flywheel has a constant moment of inertia and consists of a rigid flywheel.

8.    Inertial rotoaccumulator system, according to claim 1, characterised in that the rotational kinetic energy accumulator flywheel has an adjustable moment of inertia, being formed of a shaft provided with radial arms along which corresponding counterweights are capable of moving and it has a displaceable clamp, concentric with the shaft, provided as means for limiting the displacement of the counterweights.

9.    Inertial rotoaccumulator system, according to claim 1,  characterised in that the rotational kinetic energy accumulator flywheel has an adjustable moment of inertia and  consists of a rigid, hollow flywheel in the interior of which there is a determined mass of mercury capable of being pumped towards the zone of the axis of rotation of the flywheel or of being freely subjected to the action of the centrifugal force.

FIG-1

2/4

0122786

FIG.2

FIG.3
A-B

FIG.4

0122786

FIG.5
C-D

FIG.6

FIG.8
E-F

FIG.7